# EUROPÄISCHE PATENTSCHRIFT

(11) **EP 3 976 396 B1**
(45) Veröffentlichungstag und Bekanntmachung des Hinweises auf die Patenterteilung: **05.03.2025**
(21) Anmeldenummer: 20720374.6
(22) Anmeldetag: 08.04.2020
(51) Int. Cl.: B60C 13/00

(54) **FAHRZEUGLUFTREIFEN AUFWEISEND EINE SCHRAFFURFLÄCHE**
PNEUMATIC VEHICLE TIRE HAVING A HATCHED SURFACE
PNEUMATIQUE DE VÉHICULE PRÉSENTANT UNE SURFACE HACHURÉE

(30) Priorität: 29.05.2019 DE 102019207943
(43) Veröffentlichungstag der Anmeldung: 06.04.2022
(73) Patentinhaber: Continental Reifen Deutschland GmbH, 30175 Hannover (DE)
(72) Erfinder: RITTWEGER, Stefan, 30419 Hannover (DE); JURCO, Juraj, 30419 Hannover (DE)
(74) Vertreter: Continental Corporation
(86) Internationale Anmeldenummer: PCT/EP2020/059959
(87) Internationale Veröffentlichungsnummer: WO 2020/239307

(56) Entgegenhaltungen:
- EP-A1- 2 090 444
- DE-T5- 112012 004 764
- US-A1- 2014 326 385
- US-A1- 2015 321 523

## Beschreibung

Die Erfindung betrifft einen Fahrzeugluftreifen mit Seitenwänden und einem Laufstreifen und mit zumindest einer Schraffurfläche auf zumindest einer der Seitenwände und/oder dem Laufstreifen, wobei die Schraffurfläche nebeneinander angeordnete Schraffurelemente aufweist, wobei jedes Schraffurelement eine Schraffurrippe aufweist.

Derartige Schraffurflächen werden in der Regel im Zuge der Vulkanisation des Reifens mittels einer formgebenden eine Negativkontur der Schraffurfläche aufweisenden Vulkanisationsform in den Reifen geprägt. Eine strukturierte Oberfläche eines bereits vulkanisierten Reifens kann aber auch durch Abtragung, z.B. mittels Gravur, oder durch ein additives Verfahren erreicht werden.

Derartige Schraffurflächen sind bekannt. Auf der Reifenseitenwand und/oder auf dem Laufstreifen werden sie z.B. zur Darstellung einer Markierung genutzt. Eine Markierung kann dabei Abbildungen, Schriftzeichen, Firmennamen, Firmenlogos, Kennzeichnungen, Flächen, etc. umfassen. Die Schraffurfläche kann dabei Teil der Markierung sein und/oder diese ganz oder teilweise umgeben.

Die Streuung von Licht an den Flanken der Schraffurrippen verringert die Reflektion des Lichts an der Oberfläche des Reifens, wodurch die Helligkeitswirkung verändert ist. In der Regel wirken dabei mit Quererhebungen versehene Oberflächenbereiche dunkler als im Wesentlichen glatte, von derartigen Erhebungen freie, Oberflächenbereiche. Somit ist ein Kontrast in der an sich monochromen Oberfläche des Reifens, insbesondere der Seitenwand und/oder des Laufstreifens, ermöglicht. Hierdurch können Darstellungen von Markierungen verbessert sichtbar gemacht werden.

Fahrzeugluftreifen aufweisend eine Schraffurfläche mit Schraffurrippen aufweisend Kreuzungen sind aus der US 2014326385 A1, der EP 2 090 444 A1 und der US 2015321523 A1 bekannt.

Bekannt ist beispielsweise aus der DE 10 2012 105 864 A1 ein Fahrzeugluftreifen, der auf seiner Seitenwand eine Vielzahl von Schraffurrippen zur kontrastreichen Oberflächengestaltung und Hervorhebung einer Markierung aufweist.

Nachteilig an derartigen Ausführungsformen ist, dass die Gestaltungsmöglichkeiten gering sind.

Aufgabe ist es daher, die Kontrastwirkung noch gezielter zu beeinflussen und die Kontrastwirkung weiter zu erhöhen. Zudem soll eine verbesserte Entlüftbarkeit bei der Herstellung des Reifens mittels einer Vulkanisationsform ermöglicht werden.

Dies wird erreicht, indem jedes Schraffurelement kurze Quererhebungen aufweist, die die Schraffurrippe in Kreuzungsbereichen kreuzen, wobei die kurzen Quererhebungen jeweils genau eine Schraffurrippe kreuzen und wobei die Schraffurrippen der Schraffurelemente mit einem Abstand von 0,4 mm bis 1,0 mm angeordnet sind

Es hat sich gezeigt, dass ein Schraffurelement mit in Kreuzungsbereichen die Schraffurrippe kreuzenden kurzen Quererhebungen eine deutlich stärkere Kontrastwirkung erzeugt als eine Schraffurrippe, die frei von derartigen Kreuzungsbereichen bzw. kreuzenden kurzen Quererhebungen ist. Jede kurze Quererhebung kann sich dabei auf beiden Seiten der Schraffurrippe erstrecken. Die zusätzlichen Flanken der kurzen Quererhebungen verstärken die Streuung, die Mehrfachreflektion sowie die Absorption von auf die Schraffurfläche fallenden Lichts. Zudem sind die Flanken der Schraffurrippen durch die kurzen Quererhebungen unterbrochen, wodurch der Kontrast weiter erhöht wird.

Mehrfachreflektion an nebeneinander verlaufenden Schraffurelementen verstärkt den Effekt zusätzlich. Zudem erzeugen die kurzen Quererhebungen zusätzliche Schatteneffekte, die besonders auf dem schwarzen Gummi des Fahrzeugluftreifens ein deutliches Hervorheben der Schraffurfläche gegenüber den umgebenden Flächenbereichen bewirken. Da die kurzen Quererhebungen jeweils genau eine Schraffurrippe kreuzen, weist jede kurze Quererhebung zudem zwei freie Endbereiche auf, die eine zusätzliche Streuung des Lichts in unterschiedliche Richtungen bewirken.

Durch das Schraffurelement mit kreuzenden kurzen Quererhebungen ist die Kontrastwirkung somit noch gezielter beeinflussbar und verbesserbar.

Durch die Verbindung der kurzen Quererhebungen und der Schraffurrippe in den Kreuzungsbereichen ist auch eine vorteilhafte Entlüftbarkeit der Strukturfläche im Reifenbau ermöglicht. Weiter stabilisieren die kurzen Quererhebungen die Schraffurelemente in den Kreuzungsbereichen, wodurch die Schraffurelemente resistenter gegen Anscheuerung im Gebrauch des Reifens sind.

Eine vorteilhafte Ausführungsform ist dadurch gegeben, dass die Schraffurfläche zumindest zwei benachbarte Schraffurelemente aufweist, deren kurze Quererhebungen parallel zueinander ausgerichtet sind und dass die kurzen Quererhebungen des einen benachbarten Schraffurelements relativ zu den kurzen Quererhebungen des anderen benachbarten Schraffurelements versetzt, bevorzugt mittig versetzt, angeordnet sind.

Versetzt angeordnet bedeutet dabei, dass die kurzen Quererhebungen des einen benachbarten Schraffurelements in ihrer Verlängerung das andere benachbarte Schraffurelement zwischen zwei Kreuzungsbereichen schneidet. Mittig versetzt angeordnet bedeutet dabei, dass der Schnittbereich zumindest die Mitte zwischen zwei Kreuzungsbereichen umfasst.

Durch die versetzte Anordnung der kurzen Quererhebungen ist bei dichter Anordnung eine besonders gleichmäßige Verteilung der kurzen Quererhebungen ermöglicht.

Zweckmäßig ist es, wenn alle benachbarten gekreuzten Schraffurrippen derart ausgestaltet sind.

Eine vorteilhafte Ausführungsform ist dadurch gegeben, dass die Schraffurrippen der Schraffurelemente mit einem Abstand von 0,5 mm bis 0,7 mm, bevorzugt von 0,55 mm bis 0,60 mm, angeordnet sind.

Ein erfindungsgemäßer Abstand von 0,4 mm bis 1,0 mm, bevorzugt von 0,5 mm bis 0,7 mm, besonders bevorzugt von 0,55 mm bis 0,60 mm, ermöglicht eine verbesserte Kontrastwirkung bei gleichzeitig geringem Fertigungsaufwand.

Der Abstand kann gemessen sein zwischen Flächen, die senkrecht zur Reifenoberfläche und entlang der Grate der Schraffurrippen verlaufen.

Eine vorteilhafte Ausführungsform ist dadurch gegeben, dass die Kreuzungsbereiche zumindest eines der Schraffurelemente in einem Abstand von 0,2 mm bis 0,5 mm, bevorzugt von 0,25 mm bis 0,35 mm, angeordnet sind.

Ein solcher Abstand ermöglicht eine für eine vorteilhafte Kontrastwirkung ausreichend dichte Anordnung der kurzen Quererhebungen bei gleichzeitig geringem Fertigungsaufwand. Die Vorteile werden weiter verstärkt, wenn alle gekreuzten Schraffurrippen derart ausgestaltet sind. Die Abstände können gemessen sein zwischen den Mittelpunkten der Kreuzungsbereiche.

Eine vorteilhafte Ausführungsform ist dadurch gegeben, dass die Längserstreckungsrichtung zumindest einer der Schraffurrippen einen Winkel von 45° bis 90°, bevorzugt von 60° bis 90°, besonders bevorzugt von 90°, mit der jeweiligen Längserstreckungsrichtung der sie kreuzenden kurzen Quererhebungen einschließt.

Der Winkel beeinflusst die lokale Dichteverteilung an geneigten Flanken im Anschluss an Kreuzungsbereiche. Bei einem Winkel von kleiner als 45° ist jedoch die Entformung des Reifens erschwert. Ein Winkel von 60° bis 90° ermöglicht eine verbesserte Kontrastwirkung bei gleichzeitig guter Entformbarkeit. Die Entformbarkeit ist bei einem Winkel von 90° weiter verbessert.

Zweckmäßig ist es dabei auch, wenn alle kurzen Quererhebungen eines Schraffurelements den gleichen Winkel mit der jeweiligen Schraffurrippe einschließen. Hierdurch ist die Anzahl der zu gravierenden Richtungen zur Erzeugung der Schraffurfläche begrenzt.

Die Vorteile werden weiter verstärkt, wenn alle Schraffurelemente derart ausgestaltet sind.

Eine vorteilhafte Ausführungsform ist dadurch gegeben, dass die Schraffurfläche zumindest zwei benachbarte Schraffurelemente aufweist, zwischen deren kurzen Quererhebungen ein lichter Abstand von mindestens 10 %, bevorzugt von mindestens 13%, des Abstandes der Schraffurrippen der benachbarten Schraffurelemente besteht.

Der lichte Abstand ist dabei gemessen senkrecht zur Längserstreckungsrichtung der Schraffurelemente. Der lichte Abstand kann gemessen sein in einer Höhe H3, die 1/3 des Mittelwerts der Höhen H der beiden Schraffurrippen der benachbarten Schraffurelemente entspricht.

Es hat sich herausgestellt, dass ein solcher lichter Abstand die Entformbarkeit weiter verbessert. Auch ist hierdurch die Mehrfachreflexion von Licht an beiden der benachbarten Schraffurelementen steigerbar, wodurch die Kontrastwirkung weiter erhöht ist.

Eine vorteilhafte Ausführungsform ist dadurch gegeben, dass zumindest eine der Schraffurrippen eine Höhe H von 0,1 mm bis 0,8 mm, bevorzugt von 0,2 mm bis 0,5 mm, besonders bevorzugt von 0,25 mm bis 0,35 mm, aufweist.

Die Höhe H einer Schraffurrippe kann die entlang der Längserstreckung der Schraffurrippe gemittelte Höhe sein. Höhen können gemessen sein relativ zu einem Niveau, das einem mittleren Niveau des gesamten Schraffurgrundes des Markierungsbereichs entspricht. Höhen können auch gemessen sein bezüglich eines Niveaus, das einem Basisniveau entspricht, welches beispielsweise von einem Teil der Außenfläche des Fahrzeugluftreifens, insbesondere einem Boden einer auf der Oberfläche des Reifens ausgebildeten flachen Vertiefung, gebildet ist.

Mittelwerte entsprechen in der Regel dem arithmetischen Mittelwert.

Hierdurch ist eine günstige Dimensionierung zugunsten der Herstellbarkeit erreicht. Besonders vorteilhaft ist es dabei, wenn mehrere, bevorzugt alle, Schraffurrippen eine entsprechende Höhe H aufweisen.

Weiter ist bei einer solchen Tiefe, insbesondere in Zusammenhang mit einem Abstand von benachbarten Schraffurrippen von 0,4 mm bis 1,0 mm, bevorzugt 0,5 mm bis 0,7 mm, besonders bevorzugt 0,55 mm bis 0,60 mm, eine gute Kontrastwirkung erreichbar.

Eine vorteilhafte Ausführungsform ist dadurch gegeben, dass zumindest ein Schraffurelement derart ausgebildet ist, dass die Schraffurrippe des Schraffurelements einander gegenüberliegende Flanken aufweist, die einen Winkel von mindestens 50°, bevorzugt von 55° bis 65°, miteinander einschließen.

Solche Flankenwinkel zeigen eine gute Kontrastwirkung. Eine entsprechende Negativform eines Formwerkzeugs wie einer Vulkanisationsform kann beispielsweise mittels Lasergravur geschaffen werden. Der Winkel kann gemessen sein zwischen den Kreuzungsbereichen. Besonders vorteilhaft ist es dabei, wenn die einander gegenüberliegenden Flanken einen derartigen Winkel über eine Höhenerstreckung aufweisen, die zumindest einem Viertel der Höhe H der Schraffurrippe entspricht.

Der Vorteil verstärkt sich auch oder zudem, wenn mehrere, bevorzugt alle, Schraffurrippen derart ausgebildet sind.

Eine vorteilhafte Ausführungsform ist dadurch gegeben, dass zumindest eines der Schraffurelemente eine Schraffurrippe und/oder eine kurze Quererhebung mit jeweils einander gegenüberliegenden Flanken aufweist, die einen Winkel von 2° bis 10°, bevorzugt von 6° bis 8°, miteinander einschließen.

Durch einen derart steilen Flankenwinkel ist eine Mehrfachreflektion und damit eine verbesserte Kontrastwirkung erreichbar. Eine entsprechende Negativform eines Formwerkzeugs wie einer Vulkanisationsform kann mittels Lasergravur des Formwerkzeugs geschaffen werden. In Bezug auf die Schraffurrippe kann der Winkel gemessen sein zwischen zwei Kreuzungsbereichen. In Bezug auf die kurze Quererhebung kann der Winkel gemessen sein außerhalb des Kreuzungsbereichs. Besonders vorteilhaft ist es dabei, wenn die einander gegenüberliegenden Flanken einen derartigen Winkel über eine Höhenerstreckung aufweisen, die zumindest einem Viertel der Höhe H der Schraffurrippe entspricht. Der Vorteil verstärkt sich auch oder zudem, wenn mehrere, bevorzugt alle, Schraffurelemente derart ausgebildet sind.

In einer zweckmäßigen Ausführungsform weisen die Schraffurrippen jeweils einander gegenüberliegende Flanken auf, die einen Winkel von mindestens 50° miteinander einschließen und die kurzen Quererhebungen weisen jeweils einander gegenüberliegende Flanken auf, die einen Winkel von 2° bis 10°, bevorzugt von 6° bis 8°, miteinander einschließen.

In einer anderen zweckmäßigen Ausführungsform weisen sowohl die Schraffurrippen als auch die kurzen Quererhebungen jeweils einander gegenüberliegende Flanken auf, die einen Winkel von 2° bis 10°, bevorzugt von 6° bis 8°, miteinander einschließen.

Zweckmäßig kann es auch sein, wenn die Schraffurrippen und/oder die kurzen Quererhebungen einander gegenüberliegende Flanken aufweisen, die einen Winkel von 2° bis 10°, bevorzugt von 6° bis 8°, miteinander einschließen und dabei eine mittlere Breite von 0,08 mm bis 0,13 mm, bevorzugt von 0,1 mm, aufweisen. Die mittlere Breite ist der arithmetische Mittelwert der Breite gemessen in unterschiedlicher Höhe.

Eine vorteilhafte Ausführungsform ist dadurch gegeben, dass sich die kurzen Querrippen und/oder die Schraffurrippen von zumindest zwei Schraffurelementen, insbesondere von zumindest zwei benachbarten Schraffurelementen, in dem von ihren Flanken eingeschlossenen Winkeln um mindestens 30° voneinander unterscheiden.

Hierdurch ist die Schraffurfläche bezüglich des Zielkonflikts Anscheuerungsresistenz versus Kontrast weiter optimierbar.

Zweckmäßig ist es dabei, wenn sich benachbarte Schraffurelemente darin unterscheiden, dass die Winkel, die einander gegenüberliegende Flanken der Schraffurrippe miteinander einschließen, um mindestens 30° voneinander abweichen. Hierdurch ist eine besonders hohe Flankendichte erwirkbar.

Eine vorteilhafte Ausführungsform ist dadurch gegeben, dass zumindest eines der Schraffurelemente eine Schraffurrippe und/oder zumindest eine kurze Quererhebung mit einem Querschnitt aufweist, der im Bereich zumindest einer Flanke einen konvex gekrümmten und/oder einen linearen und/oder einen konkav gekrümmten und/oder einen gestuften und/oder einen geknickten und/oder einen strukturierten Bereich aufweist.

Der Querschnitt verläuft dabei außerhalb eines Kreuzungsbereichs senkrecht zur Längserstreckungsrichtung der jeweiligen kurzen Quererhebung bzw. Schraffurrippe. Hierdurch ist die Kontrastwirkung noch gezielter beeinflussbar und die Kontrastwirkung weiter erhöhbar. Der Vorteil verstärkt sich, wenn mehrere, bevorzugt alle, gekreuzten Schraffurrippen und/oder kurzen Quererhebungen derart ausgebildet sind.

Besonders vorteilhaft ist es dabei, wenn sich der entsprechend geformte Bereich über eine Höhenerstreckung erstreckt, die zumindest einem Viertel der Höhe H der Schraffurrippe des Schraffurelements entspricht.

Die Schraffurrippen und/oder die kurzen Quererhebungen können in einem Knick oder gekrümmt in den Schraffurgrund übergehen.

Der Querschnitt kann symmetrisch ausgebildet sein.

Die Schraffurrippen und/oder die kurzen Quererhebungen der gekreuzten Schraffurrippen können einen abgeflachten Grat aufweisen. Der Grat kann ein Plateau mit einer Breite von 0,03 mm bis 0,06 mm umfassen. Der Grat kann auch Unregelmäßigkeiten in der Höhe aufweisen, die maximal 5 % der Höhe H betragen.

Unabhängig von der Ausführungsform kann die Schraffurfläche einen Schraffurgrund aufweisen, der benachbarte gekreuzte Schraffurrippen und/oder benachbarte kurze Quererhebungen mittels des Schraffurgrundes voneinander trennt. Bevorzugt ist dabei ein weitgehend flächig ausgeführter Schraffurgrund.

Eine vorteilhafte Ausführungsform ist dadurch gegeben, dass zumindest ein Schraffurelement kurze Quererhebungen aufweist, die vom Kreuzungsbereich zu einem Schraffurgrund hin kontinuierlich abfallen.

Hierdurch ist bei vorteilhafter Stützwirkung der kurzen Quererhebungen gleichzeitig die Entformbarkeit weiter verbessert.

In einer bevorzugten Ausführungsform ist die Schraffurfläche auf einer der Seitenwände des Fahrzeugluftreifens ausgebildet.

Gemäß einer weiteren bevorzugten Ausführungsform ist die Schraffurfläche am Laufstreifen des Fahrzeugluftreifens ausgebildet. Die Schraffurfläche kann dabei insbesondere auch auf Rillenflanken und/oder Rillengründen von im Laufstreifen verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 einen Fahrzeugluftreifen 1 aufweisend eine Schraffurfläche;
Fig. 2 eine Schraffurfläche;
Fig. 3 eine Schraffurfläche;
Fig. 4 Beispiele für Querschnitte.

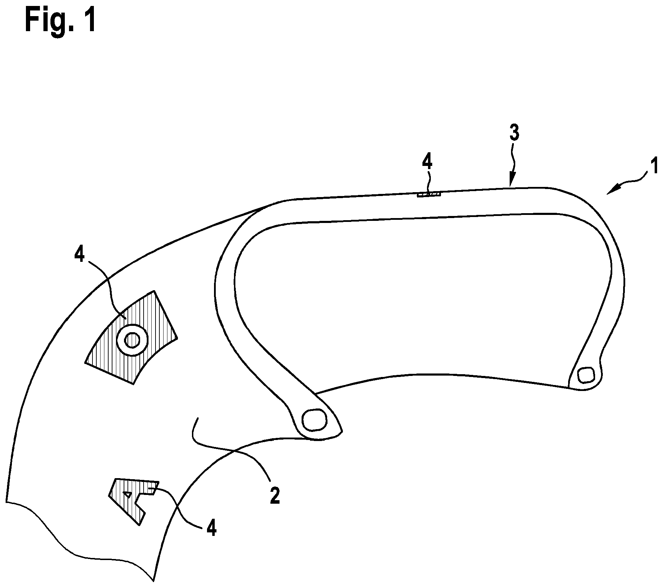

Die Figur 1 zeigt einen Fahrzeugluftreifen 1 mit Seitenwänden 2 und einem Laufstreifen 3 und mit zumindest einer Schraffurfläche 4 auf zumindest einer der Seitenwände 2 und/oder dem Laufstreifen 3. Bei einer Anordnung am Laufstreifen 3 kann die Schraffurfläche dabei insbesondere auch auf Rillenflanken und/oder Rillengründen von im Laufstreifen 3 verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Die Schraffurfläche 4 weist zumindest zwei nebeneinander verlaufende Schraffurelemente 5 auf, welche jeweils eine Schraffurrippe 51 und diese Schraffurrippe in Kreuzungsbereichen 52 kreuzende kurze Quererhebungen 53 aufweisen, wobei die kurzen Quererhebungen 53 jeweils genau eine der Schraffurrippen 51 kreuzen.

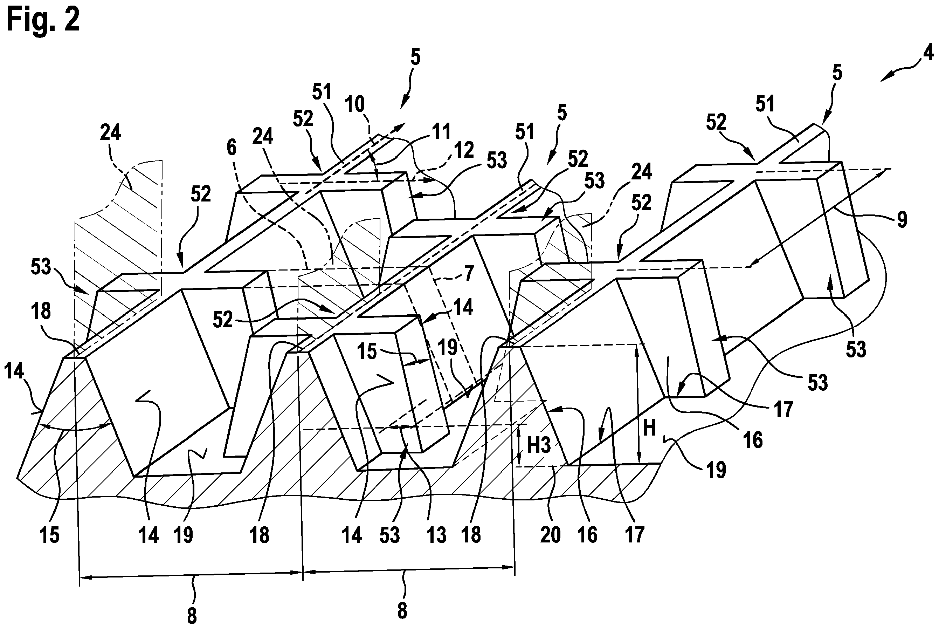

Eine Ausführungsvariante einer solchen Schraffurfläche 4 ist in der Figur 2 gezeigt. Die dargestellte Schnittansicht der Schraffurfläche 4 weist dabei zumindest zwei benachbarte Schraffurelemente 5 auf, deren kurze Quererhebungen 53 parallel zueinander ausgerichtet sind. Die kurzen Quererhebungen 53 des einen benachbarten Schraffurelements 5 sind relativ zu den kurzen Quererhebungen 53 des anderen benachbarten Schraffurelements 5 versetzt, bevorzugt mittig versetzt, angeordnet.

Die kurzen Quererhebungen 53 der gekreuzten Schraffurrippen 5 schneiden dabei in ihrer Verlängerung 6 das jeweils benachbarte Schraffurelement 5 zwischen zwei Kreuzungsbereichen 52. In der gezeigten Ausführungsform umfasst der jeweilige Schnittbereich 7 zumindest die Mitte zwischen zwei Kreuzungsbereichen 52.

Der Abstand 8 der benachbarten Schraffurelemente 5 beträgt 0,4 mm bis 1,0 mm, bevorzugt 0,5 mm bis 0,7 mm, besonders bevorzugt 0,55 mm bis 0,60 mm. Der Abstand 8 kann dabei gemessen sein zwischen Flächen 24, die senkrecht zur Reifenoberfläche und entlang der Grate 18 der benachbarten Schraffurrippen 51 verlaufen.

Die Kreuzungsbereiche 51 der gekreuzten Schraffurrippen 5 können in einem Abstand 9 von 0,2 mm bis 0,5 mm, bevorzugt von 0,25 mm bis 0,35 mm, angeordnet sein. Der Abstand 9 kann gemessen sein zwischen den Mittelpunkten der Kreuzungsbereiche 51. Im dargestellten Beispiel weisen alle Kreuzungsbereiche 51 in etwa den gleichen Abstand 9 auf.

Eine Längserstreckungsrichtung 10 der Schraffurelemente 51 schließt jeweils einen Winkel 11 von 45° bis 90°, bevorzugt von 60° bis 90°, besonders bevorzugt von 90°, mit einer jeweiligen Längserstreckungsrichtung 12 der sie kreuzenden kurzen Quererhebungen 53 ein. Dargestellt ist jeweils ein Winkel 11 von in etwa 90°.

Ein lichter Abstand 13 zwischen den kurzen Quererhebungen 53 benachbarter gekreuzter Schraffurrippen 5 kann mindestens 10 %, bevorzugt von mindestens 13%, des Abstandes 8 der benachbarten Schraffurelemente 5 betragen. Der lichte Abstand 13 ist dabei gemessen senkrecht zur Längserstreckungsrichtung 10 der Schraffurelemente 51. Der lichte Abstand ist gemessen auf einer Höhe H3, welche 1/3 des Mittelwerts der Höhen H der Schraffurrippen 51 beiden benachbarten Schraffurelemente 5 betragen kann.

Die Schraffurrippen 51 weisen eine Höhe H von 0,1 mm bis 0,8 mm, bevorzugt von 0,2 mm bis 0,5 mm, besonders bevorzugt von 0,25 mm bis 0,35 mm, auf, wobei die Höhe H gemittelt ist entlang der Längserstreckung der jeweiligen Schraffurrippe 51. Die Höhe H kann gemessen sein relativ zu einem Niveau 20, das einem mittleren Niveau eines Schraffurgrundes 19 entspricht. Das Niveau 20 kann auch einem Basisniveau entsprechen, welches beispielsweise von einem Teil der Außenfläche des Fahrzeugluftreifens, insbesondere einem Boden einer auf der Oberfläche des Reifens ausgebildeten flachen Vertiefung, gebildet ist.

Die Schraffurrippen 51 weisen jeweils einander gegenüberliegende Flanken 14 auf, die einen Winkel 15 von mindestens 50°, bevorzugt von 55° bis 65°, miteinander einschließen. Die kurzen Quererhebungen 53 weisen jeweils einander gegenüberliegende Flanken 14 auf, die einen Winkel 15 von 2° bis 10°, bevorzugt von 6° bis 8°, miteinander einschließen. Besonders vorteilhaft ist es dabei, wenn die einander gegenüberliegenden Flanken einen jeweiligen derartigen Winkel über eine Höhenerstreckung aufweisen, die zumindest einem Viertel der Höhe H der Schraffurrippe entspricht

Es können aber auch sowohl die Schraffurrippen 51 als auch die kurzen Quererhebungen 53 jeweils einander gegenüberliegende Flanken 14 aufweisen, die einen Winkel 15 von 2° bis 10°, bevorzugt von 6° bis 8°, miteinander einschließen.

Die dargestellten Schraffurrippen 51 und/oder die kurzen Quererhebungen 53 weisen einen Querschnitt auf, der im Bereich zumindest einer Flanke einen Bereich 16 aufweisen, der linear verläuft. Dieser kann wie gezeigt in einem Knick 17 oder auch gekrümmt in den Schraffurgrund 19 übergehen.

Die Schraffurrippen 51 und/oder die kurzen Quererhebungen 53 der gekreuzten Schraffurrippen 5 können einen abgeflachten Grat 18 aufweisen. Der Grat kann ein Plateau mit einer Breite von 0,03 mm bis 0,06 mm umfassen. Der Grat 18 kann auch Unregelmäßigkeiten in der Höhe aufweisen, die maximal 5 % der maximalen Höhendifferenz der Schraffurfläche betragen.

Die Schraffurfläche 4 kann einen Schraffurgrund 19 aufweisen, der benachbarte Schraffurelemente 5 und/oder benachbarte kurze Quererhebungen 53 voneinander trennt.

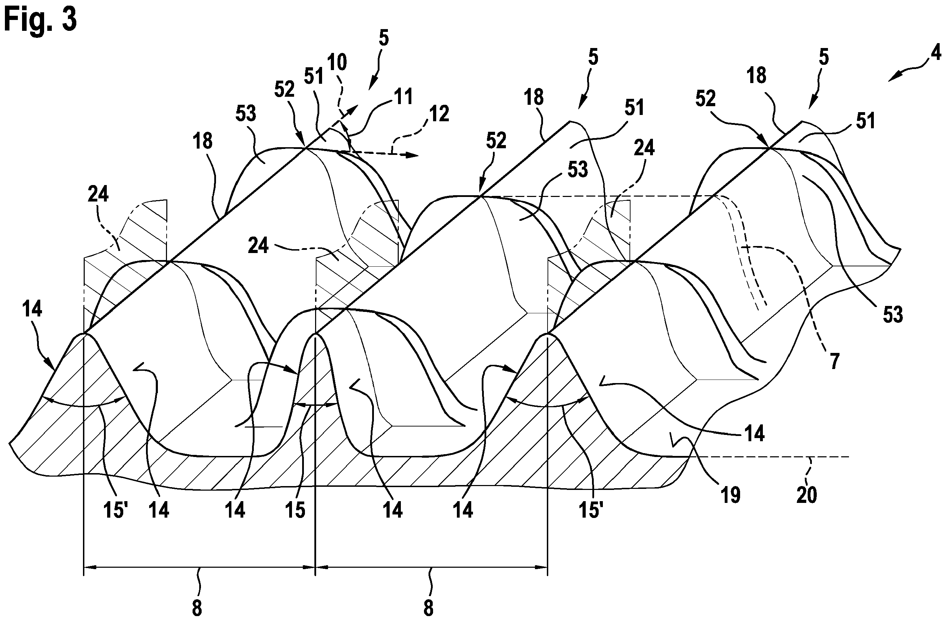

Die Figur 3 zeigt ein weiteres Ausführungsbeispiel gemäß der Erfindung. Es unterscheidet sich von dem in der Figur 2 gezeigten Ausführungsbeispiel zumindest darin, dass die kurzen Quererhebungen 53 vom Kreuzungsbereich 52 kontinuierlich zum Schraffurgrund 19 hin abfallen. Weiter gehen die Flanken 14 der Schraffurrippen 51 und der kurzen Quererhebungen 53 in einer Krümmung in den Schraffurgrund 19 über. Unabhängig hiervon unterscheidet sich die Ausführungsbeispiele auch dadurch, dass sich die Schraffurrippen 51 von zumindest zwei Schraffurelementen 5, insbesondere von zumindest zwei benachbarten Schraffurelementen 5, in dem von ihren Flanken 14 eingeschlossenen Winkeln 15, 15° um mindestens 30° voneinander unterscheiden. Der Winkel 15 kann dabei 2° bis 10°, bevorzugt 6° bis 8°, betragen und der Winkel 15` kann dabei mindestens 50° betragen.

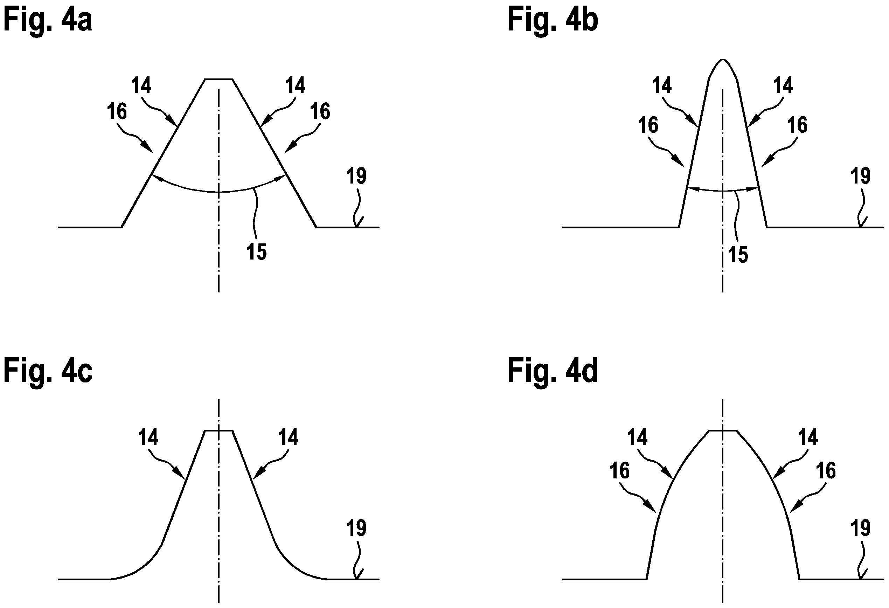

Die Figuren 4a bis 4g zeigen Beispiele für Querschnitte der Schraffurrippen 51 und/oder der kurzen Quererhebungen 53 eines Schraffurelements. Der Querschnitt verläuft dabei jeweils außerhalb eines Kreuzungsbereichs 52 senkrecht zur Längserstreckungsrichtung der jeweiligen kurzen Quererhebung 53 bzw. Schraffurrippe 51. Die Querschnitte eignen sich für die in den Figuren 2 und 3 dargestellten Schraffurbereiche 4. Ohne Beschränkung der Allgemeinheit sind die dargestellten Querschnitte symmetrisch ausgeführt.

Die Fig. 4a zeigt einen Querschnitt, der im Bereich der Flanken 14 einen linear verlaufenden Bereich 16 aufweist. Die Flanken 14 liegen einander gegenüber und können einen Winkel 15 von mindestens 50°, bevorzugt von 55° bis 65°, miteinander einschließen. Die Flanken 14 gehen in einem Knick in den flächigen Schraffurgrund 19 über.

Die Fig. 4b zeigt einen entsprechenden Querschnitt, wobei die Flanken 14 einen Winkel 15 von 2° bis 10°, bevorzugt von 6° bis 8°, miteinander einschließen.

Die Fig. 4c zeigt exemplarisch, dass die Flanken 14, unabhängig von der genauen Ausgestaltung des Querschnitts, auch mit einer Krümmung in den Schraffurgrund 19 übergehen können.

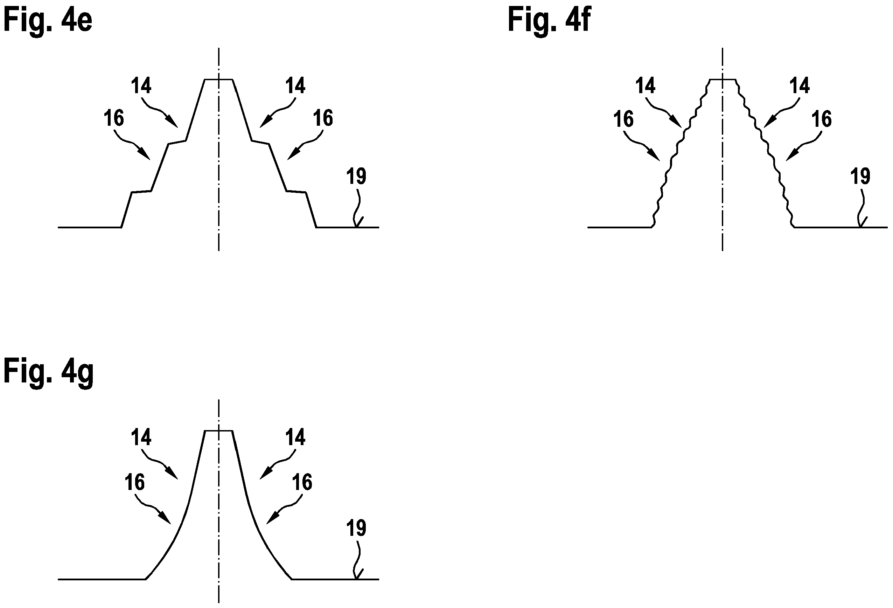

Die Fig. 4d zeigt einen Querschnitt, der im Bereich der Flanken 14 einen konvex gekrümmten Bereich 16 aufweist. Die Fig. 4e zeigt einen Querschnitt, der im Bereich der Flanken 14 einen gestuften Bereich 16 aufweist.

Die Fig. 4f zeigt einen Querschnitt, der im Bereich der Flanken 14 einen strukturierten Bereich 16 aufweist. Die Fig. 4g zeigt einen Querschnitt, der im Bereich der Flanken 14 einen konkav gekrümmten Bereich 16 aufweist.

In allen Figuren 4a bis 4g kann sich der entsprechend ausgeformte Bereich 16 über zumindest ein Viertel der Höhe H der Schraffurrippe des entsprechenden Schraffurelements erstrecken.

### Bezugszeichenliste

- 1: Fahrzeugluftreifen
- 2: Seitenwand
- 3: Laufstreifen
- 4: Schraffurfläche
- 5: gekreuzte Schraffurrippe
- 51: Schraffurrippe
- 52: Kreuzungsbereich
- 53: kurze Quererhebung
- 6: Verlängerung
- 7: Schnittpunkt
- 8: Abstand von Schraffurrippen
- 9: Abstand von Kreuzungsbereichen
- 10: Längserstreckungsrichtung einer Schraffurrippe
- 11: Winkel
- 12: Längserstreckungsrichtung einer kurzen Quererhebung
- 13: lichter Abstand
- 14: einander gegenüberliegende Flanken
- 15: Winkel
- 15': Winkel
- 16: Bereich
- 17: geknickter Bereich
- 18: Grat
- 19: Schraffurgrund
- 20: Niveau
- 24: Fläche

- H: Höhe einer Schraffurrippe
- H3: Höhe

## Patentansprüche

1. Fahrzeugluftreifen (1) mit Seitenwänden (2) und einem Laufstreifen (3) und mit zumindest einer Schraffurfläche (4) auf zumindest einer der Seitenwände (2) und/oder dem Laufstreifen (3), wobei die Schraffurfläche (4) nebeneinander angeordnete Schraffurelemente (5) aufweist, wobei jedes Schraffurelement (5) eine Schraffurrippe (51) aufweist, wobei
jedes Schraffurelement (5) kurze Quererhebungen (53) aufweist, die die Schraffurrippe (51) in Kreuzungsbereichen (52) kreuzen,
**dadurch gekennzeichnet, dass**
die kurzen Quererhebungen (53) jeweils genau eine Schraffurrippe (51) kreuzen, und
dass die Schraffurrippen (51) der Schraffurelemente (5) mit einem Abstand (8) von 0,4 mm bis 1,0 mm, angeordnet sind.

2. Fahrzeugluftreifen (1) nach Anspruch 1, **dadurch gekennzeichnet, dass** die Schraffurfläche (4) zumindest zwei benachbarte Schraffurelemente (5) aufweist, deren kurze Quererhebungen (53) parallel zueinander ausgerichtet sind und dass die kurzen Quererhebungen (53) des einen benachbarten Schraffurelements (5) relativ zu den kurzen Quererhebungen (53) des anderen benachbarten Schraffurelements (5) versetzt, bevorzugt mittig versetzt, angeordnet sind.

3. Fahrzeugluftreifen (1) nach zumindest einem der vorhergehenden Ansprüche, **dadurch gekennzeichnet, dass** die Schraffurrippen (51) der Schraffurelemente (5) mit einem Abstand (8) von 0,5 mm bis 0,7 mm, bevorzugt von 0,55 mm bis 0,60 mm, angeordnet sind.

4. Fahrzeugluftreifen (1) nach zumindest einem der vorhergehenden Ansprüche, **dadurch gekennzeichnet, dass** die Kreuzungsbereiche (52) zumindest eines der Schraffurelemente (5) in einem Abstand (9) von 0,2 mm bis 0,5 mm, bevorzugt von 0,25 mm bis 0,35 mm, angeordnet sind.

5. Fahrzeugluftreifen (1) nach zumindest einem der vorhergehenden Ansprüche, **dadurch gekennzeichnet, dass** die Längserstreckungsrichtung (10) zumindest einer der Schraffurrippen (51) einen Winkel (11) von 45° bis 90°, bevorzugt von 60° bis 90°, besonders bevorzugt von 90°, mit der jeweiligen Längserstreckungsrichtung (12) der sie kreuzenden kurzen Quererhebungen (53) einschließt.

6. Fahrzeugluftreifen (1) nach zumindest einem der vorhergehenden Ansprüche, **dadurch gekennzeichnet, dass** die Schraffurfläche (4) zumindest zwei benachbarte Schraffurelemente (5) aufweist, zwischen deren kurzen Quererhebungen (53) ein lichter Abstand (13) von mindestens 10 %, bevorzugt von mindestens 13%, des Abstandes (8) der Schraffurrippen (51) der benachbarten Schraffurelemente (5) besteht.

7. Fahrzeugluftreifen (1) nach zumindest einem der vorhergehenden Ansprüche, **dadurch gekennzeichnet, dass** zumindest eine der Schraffurrippen (51) eine Höhe H von 0,1 mm bis 0,8 mm, bevorzugt von 0,2 mm bis 0,5 mm, besonders bevorzugt von 0,25 mm bis 0,35 mm, aufweist.

8. Fahrzeugluftreifen (1) nach zumindest einem der vorhergehenden Ansprüche, **dadurch gekennzeichnet, dass** zumindest ein Schraffurelement (5) derart ausgebildet ist, dass die Schraffurrippe (51) des Schraffurelements (5) einander gegenüberliegende Flanken (14) aufweist, die einen Winkel (15, 15') von mindestens 50°, bevorzugt von 55° bis 65°, miteinander einschließen.

9. Fahrzeugluftreifen (1) nach zumindest einem der vorhergehenden Ansprüche, **dadurch gekennzeichnet, dass** zumindest eines der Schraffurelemente (5) eine Schraffurrippe (51) und/oder eine kurze Quererhebung (53) mit jeweils einander gegenüberliegenden Flanken (14) aufweist, die einen Winkel (15) von 2° bis 10°, bevorzugt von 6° bis 8°, miteinander einschließen.

10. Fahrzeugluftreifen (1) nach zumindest einem der vorhergehenden Ansprüche, **dadurch gekennzeichnet, dass** sich die kurzen Querrippen (8) und/oder die Schraffurrippen (51) von zumindest zwei Schraffurelementen (5), insbesondere von zumindest zwei benachbarten Schraffurelementen (5), in dem von ihren Flanken (14) eingeschlossenen Winkeln (15, 15') um mindestens 30° voneinander unterscheiden.

11. Fahrzeugluftreifen (1) nach zumindest einem der vorhergehenden Ansprüche, **dadurch gekennzeichnet, dass** zumindest eines der Schraffurelemente (5) eine Schraffurrippe (51) und/oder zumindest eine kurze Quererhebung (53) mit einem Querschnitt aufweist, der im Bereich zumindest einer Flanke (14) einen konvex gekrümmten und/oder einen linearen und/oder einen konkav gekrümmten und/oder einen gestuften und/oder einen geknickten und/oder einen strukturierten Bereich (16) aufweist.

12. Fahrzeugluftreifen (1) nach zumindest einem der vorhergehenden Ansprüche, **dadurch gekennzeichnet, dass** zumindest ein Schraffurelement (5) kurze Quererhebungen (53) aufweist, die vom Kreuzungsbereich (52) zu einem Schraffurgrund (19) hin kontinuierlich abfallen.

## Claims

1. Pneumatic vehicle tyre (1) having side walls (2) and having a tread (3) and having at least one hatching area (4) on at least one of the side walls (2) and/or on the tread (3), wherein the hatching area (4) has mutually adjacently arranged hatching elements (5), wherein each hatching element (5) has a hatching rib (51), wherein
each hatching element (5) has short transverse elevations (53), which cross the hatching rib (51) in crossing regions (52),
**characterized in that**
the short transverse elevations (53) cross in each case exactly one hatching rib (51), and
**in that** the hatching ribs (51) of the hatching elements (5) are arranged with a spacing (8) of 0.4 mm to 1.0 mm.

2. Pneumatic vehicle tyre (1) according to Claim 1, **characterized in that** the hatching area (4) has at least two adjacent hatching elements (5), the short transverse elevations (53) of which are oriented parallel to one another, and **in that** the short transverse elevations (53) of one adjacent hatching element (5) are arranged offset, preferably centrally offset, relative to the short transverse elevations (53) of the other adjacent hatching element (5).

3. Pneumatic vehicle tyre (1) according to at least either of the preceding claims, **characterized in that** the hatching ribs (51) of the hatching elements (5) are arranged with a spacing (8) of 0.5 mm to 0.7 mm, preferably of 0.55 mm to 0.60 mm.

4. Pneumatic vehicle tyre (1) according to at least one of the preceding claims, **characterized in that** the crossing regions (52) of at least one of the hatching elements (5) are arranged with a spacing (9) of 0.2 mm to 0.5 mm, preferably of 0.25 mm to 0.35 mm.

5. Pneumatic vehicle tyre (1) according to at least one of the preceding claims, **characterized in that** the longitudinal-extent direction (10) of at least one of the hatching ribs (51) includes an angle (11) of 45° to 90°, preferably of 60° to 90°, particularly preferably of 90°, with the respective longitudinal-extent direction (12) of the short transverse elevations (53) crossing it.

6. Pneumatic vehicle tyre (1) according to at least one of the preceding claims, **characterized in that** the hatching area (4) has at least two adjacent hatching elements (5), between the short transverse elevations (53) of which there is a clear spacing (13) of at least 10%, preferably of at least 13%, of the spacing (8) of the hatching ribs (51) of the adjacent hatching elements (5).

7. Pneumatic vehicle tyre (1) according to at least one of the preceding claims, **characterized in that** at least one of the hatching ribs (51) has a height H of 0.1 mm to 0.8 mm, preferably of 0.2 mm to 0.5 mm, particularly preferably of 0.25 mm to 0.35 mm.

8. Pneumatic vehicle tyre (1) according to at least one of the preceding claims, **characterized in that** at least one hatching element (5) is designed in such a way that the hatching rib (51) of the hatching element (5) has mutually opposite flanks (14) which include an angle (15, 15') of at least 50°, preferably of 55° to 65°, with one another.

9. Pneumatic vehicle tyre (1) according to at least one of the preceding claims, **characterized in that** at least one of the hatching elements (5) has a hatching rib (51) and/or a short transverse elevation (53) with in each case mutually opposite flanks (14) which include an angle (15) of 2° to 10°, preferably of 6° to 8°, with one another.

10. Pneumatic vehicle tyre (1) according to at least one of the preceding claims, **characterized in that** the short transverse ribs (8) and/or the hatching ribs (51) of at least two hatching elements (5), in particular of at least two adjacent hatching elements (5), differ from one another by at least 30° in terms of the angles (15, 15') included by their flanks (14).

11. Pneumatic vehicle tyre (1) according to at least one of the preceding claims, **characterized in that** at least one of the hatching elements (5) has a hatching rib (51) and/or at least one short transverse elevation (53) with a cross section which, in the region of at least one flank (14), has a convexly curved and/or a linear and/or a concavely curved and/or a stepped and/or a bent and/or a structured region (16).

12. Pneumatic vehicle tyre (1) according to at least one of the preceding claims, **characterized in that** at least one hatching element (5) has short transverse elevations (53) which slope downwards continuously from the crossing region (52) to a hatching base (19).

## Revendications

1. Pneumatique de véhicule (1) avec des parois latérales (2) et une bande de roulement (3) et avec au moins une surface hachurée (4) sur au moins l'une des parois latérales (2) et/ou la bande de roulement (3), la surface hachurée (4) présentant des éléments de hachure (5) agencés côte à côte, chaque élément de hachure (5) présentant une nervure de hachure (51),
chaque élément de hachure (5) présentant de courtes protubérances transversales (53) qui croisent la nervure de hachure (51) dans des zones de croisement (52),
**caractérisé en ce que**
les courtes protubérances transversales (53) croisent chacune exactement une nervure de hachure (51), et
**en ce que** les nervures de hachure (51) des éléments de hachure (5) sont agencées avec une distance (8) de 0,4 mm à 1,0 mm.

2. Pneumatique de véhicule (1) selon la revendication 1, **caractérisé en ce que** la surface hachurée (4) présente au moins deux éléments de hachure voisins (5) dont les courtes protubérances transversales (53) sont orientées parallèlement les unes aux autres et **en ce que** les courtes protubérances transversales (53) de l'un des éléments de hachure voisins (5) sont agencées en décalage par rapport aux courtes protubérances transversales (53) de l'autre élément de hachure voisin (5), de préférence en décalage au centre.

3. Pneumatique de véhicule (1) selon au moins l'une quelconque des revendications précédentes, **caractérisé en ce que** les nervures de hachure (51) des éléments de hachure (5) sont agencées avec une distance (8) de 0,5 mm à 0,7 mm, de préférence de 0,55 mm à 0,60 mm.

4. Pneumatique de véhicule (1) selon au moins l'une quelconque des revendications précédentes, **caractérisé en ce que** les zones de croisement (52) d'au moins l'un des éléments de hachure (5) sont agencées à une distance (9) de 0,2 mm à 0,5 mm, de préférence de 0,25 mm à 0,35 mm.

5. Pneumatique de véhicule (1) selon au moins l'une quelconque des revendications précédentes, **caractérisé en ce que** la direction d'extension longitudinale (10) d'au moins l'une des nervures de hachure (51) forme un angle (11) de 45° à 90°, de préférence de 60° à 90°, de manière particulièrement préférée de 90°, avec la direction d'extension longitudinale respective (12) des courtes protubérances transversales (53) qui les croisent.

6. Pneumatique de véhicule (1) selon au moins l'une quelconque des revendications précédentes, **caractérisé en ce que** la surface hachurée (4) présente au moins deux éléments de hachure voisins (5) entre les courtes protubérances transversales (53) desquels il existe une distance libre (13) d'au moins 10 %, de préférence d'au moins 13 %, de la distance (8) entre les nervures de hachure (51) des éléments de hachure voisins (5).

7. Pneumatique de véhicule (1) selon au moins l'une quelconque des revendications précédentes, **caractérisé en ce qu'**au moins l'une des nervures de hachure (51) présente une hauteur H de 0,1 mm à 0,8 mm, de préférence de 0,2 mm à 0,5 mm, de manière particulièrement préférée de 0,25 mm à 0,35 mm.

8. Pneumatique de véhicule (1) selon au moins l'une quelconque des revendications précédentes, **caractérisé en ce qu'**au moins un élément de hachure (5) est réalisé de telle sorte que la nervure de hachure (51) de l'élément de hachure (5) présente des flancs (14) opposés les uns aux autres, qui forment entre eux un angle (15, 15') d'au moins 50°, de préférence de 55° à 65°.

9. Pneumatique de véhicule (1) selon au moins l'une quelconque des revendications précédentes, **caractérisé en ce qu'**au moins l'un des éléments de hachure (5) présente une nervure de hachure (51) et/ou une courte protubérance transversale (53) avec des flancs (14) respectivement opposés qui forment entre eux un angle (15) de 2° à 10°, de préférence de 6° à 8°.

10. Pneumatique de véhicule (1) selon au moins l'une quelconque des revendications précédentes, **caractérisé en ce que** les nervures transversales courtes (8) et/ou les nervures de hachure (51) d'au moins deux éléments de hachure (5), notamment d'au moins deux éléments de hachures (5) voisins, diffèrent les unes des autres d'au moins 30° dans l'angle (15, 15') formé par leurs flancs (14).

11. Pneumatique de véhicule (1) selon au moins l'une quelconque des revendications précédentes, **caractérisé en ce qu'**au moins l'un des éléments de hachure (5) présente une nervure de hachure (51) et/ou au moins une courte protubérance transversale (53) ayant une section transversale qui présente, dans la zone d'au moins un flanc (14), une zone (16) à courbure convexe et/ou linéaire et/ou à courbure concave et/ou étagée et/ou fléchie et/ou structurée.

12. Pneumatique de véhicule (1) selon au moins l'une quelconque des revendications précédentes, **caractérisé en ce qu'**au moins un élément de hachure (5) présente de courtes protubérances transversales (53) qui descendent en continu depuis la zone de croisement (52) vers un fond de hachure (19).
